# EUROPÄISCHE PATENTSCHRIFT

(11) **EP 0 670 129 B1**
(45) Veröffentlichungstag und Bekanntmachung des Hinweises auf die Patenterteilung: **14.05.1997**
(21) Anmeldenummer: 94101696.6
(22) Anmeldetag: 04.02.1994
(51) Int. Cl.: A47F 3/00

(54) **Vitrine mit einer Beleuchtungseinrichtung**
Display case with lighting device
Vitrine avec un dispositif d'éclairage

(43) Veröffentlichungstag der Anmeldung: 06.09.1995
(73) Patentinhaber: Glasbau Hahn GmbH & Co. KG, D-60314 Frankfurt (DE)
(72) Erfinder: Leschinger, Günter, D-63607 Wächtersbach (DE); Sauner, Michael, Dr., D-63486 Bruchköbel 2 (DE)
(74) Vertreter: Reichel, Wolfgang, Dipl.-Ing.

(56) Entgegenhaltungen:
- EP-A- 0 388 128
- EP-A- 0 444 519
- GB-A- 2 206 786

## Beschreibung

Die Erfindung betrifft eine Vitrine zur Zurschaustellung von Gegenständen mit einer Beleuchtungsvorrichtung und mit mehreren, aus durchsichtigem Material bestehenden Seitenflächen, einem als Sockel gebildeten Unterteil und einem die Oberseite bildenden Oberteil, in dem sich die Beleuchtungsvorrichtung befindet.

Eine derartige Vitrine ist bereits bekannt. Die Beleuchtungsvorrichtung im Oberteil der Vitrine, deren Seitenflächen aus Glas bestehen, ist in Form von Lichtstrahlern ausgebildet, durch welche die in der Vitrine befindlichen Gegenstände beleuchtet werden. Nachteilig ist die bei der Lichterzeugung anfallende Wärme, die zur Aufheizung des Vitrinen-Innenraumes führen kann, besonders wenn eine starke und gleichmäßige Beleuchtung erwünscht wird. Hierzu sind in der Regel eine Vielzahl von Lichtstrahlern in Form von Glühlampen oder Leuchtstofflampen notwendig.

Die Aufgabe der Erfindung besteht nun darin, eine Vitrine der eingangs genannten Art anzugeben, bei welcher bei starker und gleichmäßiger Beleuchtung die Erwärmung des Vitrinen-Innenraumes vermieden wird.

Diese Aufgabe wird dadurch gelöst, daß das Oberteil eine Beleuchtungsquelle mit einer Vielzahl von daran angeschlossenen Lichtleitkabeln enthält, deren Endstücke durch die Unterseite des Oberteils ragen, daß zwischen dem Oberteil und dem Unterteil ein oder mehrere Zwischenböden angebracht sind, daß weitere Lichtleitkabel vom Oberteil zu dem jeweiligen Zwischenboden geführt sind und dort mit ihren Endstücken in der Unterseite enden, daß die Unterseite des Oberteils und die Unterseite der Zwischenböden jeweils aus einer Platte besteht, in welcher die Endstücke der Lichtleitkabel gehalten werden, daß im Bereich der Innenseite einer Seitenfläche ein senkrechter Kabelschacht zwischen dem Oberteil und dem Unterteil zur Aufnahme der zu dem bzw. den Zwischenböden führenden Lichtleitkabel angebracht ist, daß jeder Zwischenboden einen Hohlraum zur Aufnahme der Lichtleitkabel aufweist, welcher durch eine Öffnung im Bereich des Kabelschachtes von außen zugänglich ist, daß der bzw. die Zwischenböden in ihrer Höhe verstellbar ist bzw. sind und daß der Kabelschacht einen nach dem Innern der Vitrine gerichteten senkrechten Schlitz aufweist.

Gemäß der Erfindung wird nur eine einzige Beleuchtungsquelle benötigt und durch die Vielzahl von Lichtleitkabeln, deren Endstücke durch die Unterseite des Oberteils ragen, eine gleichmäßige Ausleuchtung des Vitrinen-Innenraumes erreicht, ohne daß dabei eine Erwärmung des Innenraumes der Vitrine entsteht, da die Beleuchtungsquelle sich außerhalb des Vitrinen-Innenraumes im Oberteil befindet und die dort entstehende Wärme leicht nach außen abgeführt werden kann. Je nach Zusammensetzung des Materials der Lichtleiter kann dabei auch noch der Infrarotanteil der Lichtstrahlung bereits zusätzlich verringert werden.

Die Beleuchtung eines mit einer Glasscheibe auf der Vorderseite verschließbaren Regals mit Hilfe von Lichtleitkabeln ist bereits bekannt. So wird in der GB-A- 2 206 786 eine Beleuchtungsvorrichtung für in dem Regal zurschaugestellte Gegenstände beschrieben, bei welcher in der Rückwand des Regals geführte Lichtleitkabel in den Böden enden und nach oben oder auch nach unten gerichtet sind, sodaß eine Beleuchtung der auf den Böden liegenden Gegenstände von unten und auch von oben möglich ist. Die Lichtleitkabel sind dabei mit einer gemeinsamen Lichtquelle verbunden, wobei die genannte Druckschrift offenläßt, wo diese Lichtquelle angebracht ist.

Weiterhin wird in der EP-A- 0 388 128 eine Beleuchtungsvorrichtung für eine Kühltheke beschrieben, bei welcher die Lichtquelle auf der Oberseite der Kühltheke angebracht ist und mit dieser eine Vielzahl von Lichtleitkabeln verbunden sind, welche entweder unterhalb der Oberseite enden oder durch die Türrahmen geführt im Innern der Kühltheke enden, sodaß eine Beleuchtung der im Innenraum der Kühltheke befindlichen Gegenstände von oben und von vorne möglich ist, ohne daß durch die Beleuchtung eine Temperaturerhöhung im Innenraum der Kühltheke verursacht wird.

Vorteilhafte Weiterbildungen der Erfindung ergeben sich aus den Unteransprüchen.

Die Erfindung wird anhand eines Ausführungsbeispiels näher erläutert, welches in der Zeichnung dargestellt ist. Es zeigt:

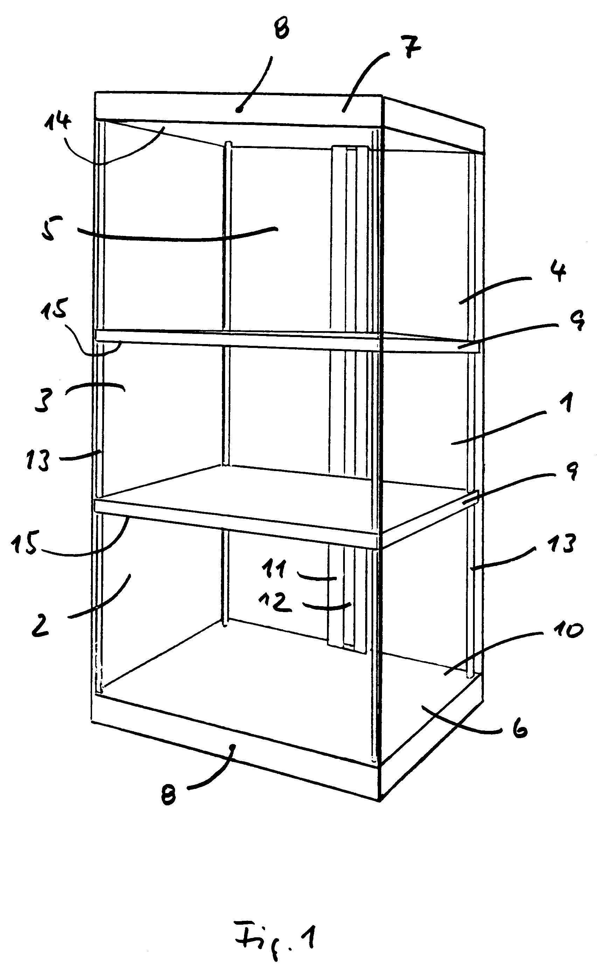

- Fig. 1: eine perspektivische Ansicht einer Vitrine,

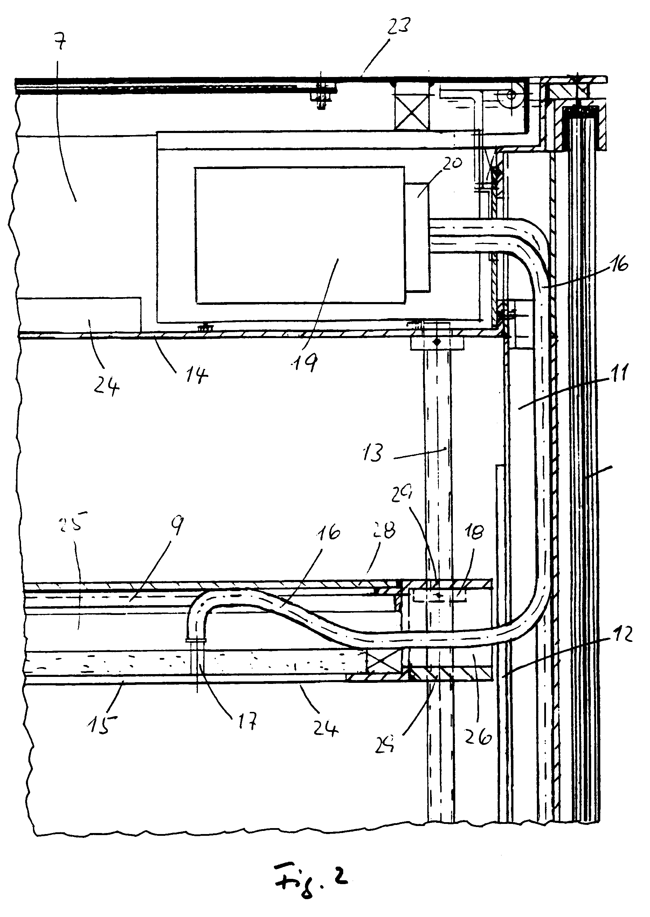

- Fig. 2: einen senkrechten Schnitt durch die Vitrine im Bereich der rechten Seitenfläche und des Oberteils,

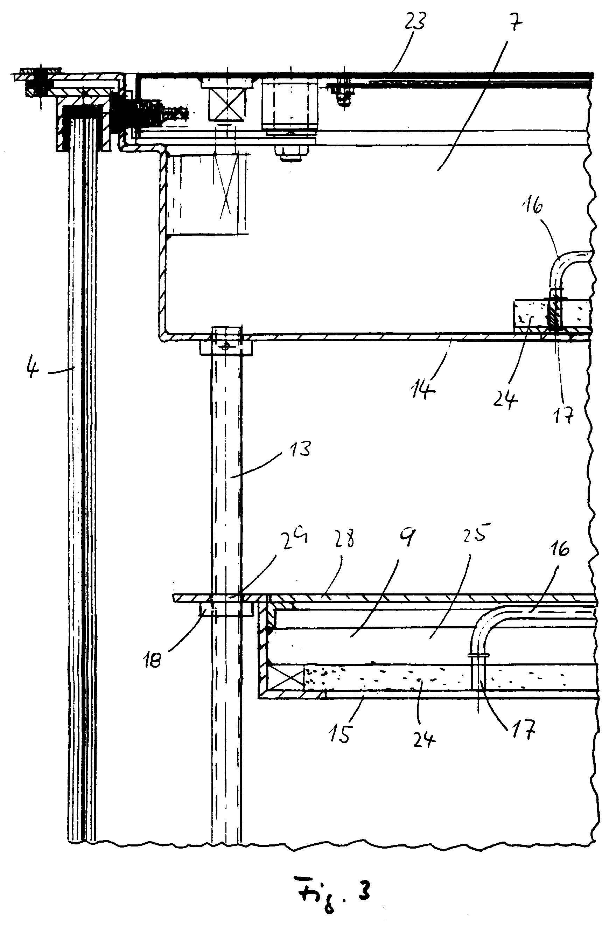

- Fig. 3: einen senkrechten Schnitt durch die Vitrine im Bereich der linken Seitenfläche und des Oberteils,

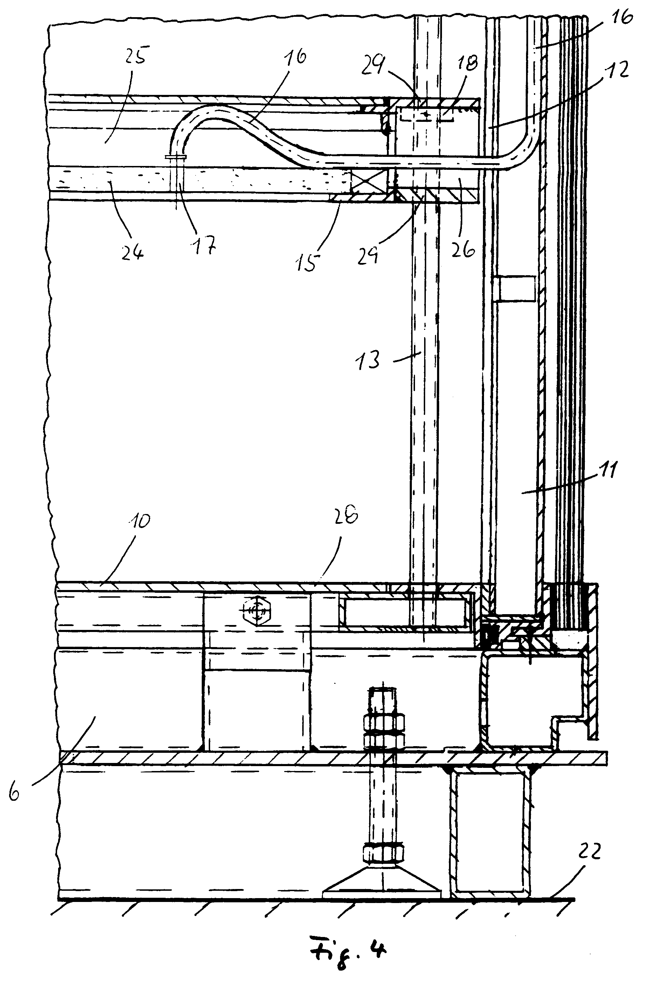

- Fig. 4: einen senkrechten Schnitt durch die Vitrine im Bereich der rechten Seitenfläche und des Unterteils und

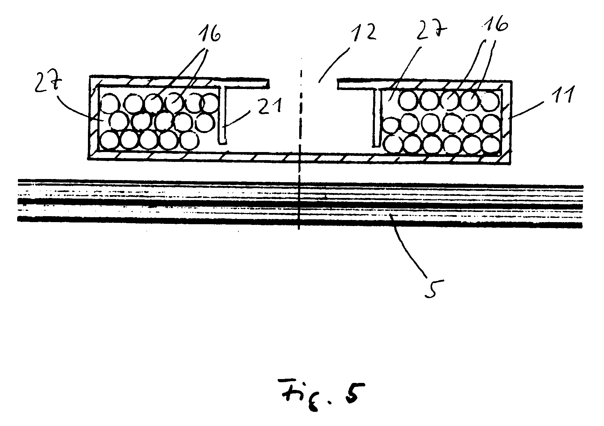

- Fig. 5: einen waagerechten Schnitt durch den Kabelschacht.

Die Vitrine 1 besteht aus vier gläsernen Seitenflächen 2,3,4 und 5, welche zwischen dein als Sockel ausgebildeten Unterteil 6 und dem die Oberseite bildenden Oberteil 7 angebracht sind. Eine oder auch mehrere Seitenflächen können als schwenkbare oder verschiebbare Tür 2 ausgebildet sein, die durch Schlösser 8 verschließbar ist. Bei den Darstellungen gemäß der Zeichnung wird davon ausgegangen, daß die Vitrine 1 einen viereckigen Querschnitt aufweist. Die Erfindung ist jedoch auch auf Vitrinen mit fünf- und mehreckigem Grundriß anwendbar.

Im Oberteil 7 ist eine Beleuchtungsquelle 19 untergebracht, deren Wärme durch Konvektionskühlung oder einen nicht gezeigten Lüfter durch die entsprechend ausgebildete Abdeckung 23 des Oberteils 7 nach außen abgeführt wird. Das Oberteil 7 kann auch noch zusätzlich im Bereich der Beleuchtungsquelle 19 durch eine geeignete Wärmeisolierung gegen den Innenraum der Vitrine 1 abgeschirmt sein. An der Beleuchtungsquelle 19 sind, eventuell unter Zwischenschaltung geeigneter Filter 20 zur Filterung der, für die im Innern der Vitrine 1 befindlichen Gegenstände schädlichen Stahlung (beispielsweise Infrarotstrahlung, UV-Strahlung, usw.), eine Vielzahl von Lichtleitkabeln 16 angeschlossen. Zwischen der Beleuchtungsquelle 19 und den Lichtleitkabeln 16 kann neben den Filtern 20 oder anstelle der Filter 20 auch ein Linsensystem, beispielsweise ein optischer Kondensator zur gleichmäßigeren Lichtverteilung bei besonders starken Lichtleitkabelbündeln eingesetzt sein.

Jedes Lichtleitkabel 16 endet in einem Endstück 17, an welchen die von der Beleuchtungsquelle 19 erzeugte Lichtstrahlung austritt. Die Endstücke 17 können bedarfsweise auch jeweils eine Linse zur Lichtverteilung oder auch zur Lichtkonzentration aufweisen. Gehalten werden die Endstücke 17 jeweils in einer gemeinsamen, beispielsweise aus Hartschaum bestehenden Platte 24, die mit entsprechenden Bohrungen zur Aufnahme der Endstücke 17 versehen ist. Die Größe der Bohrungen ist auch materialabhängig und dabei so zu wählen, daß sich die Endstücke 17 in diese zwar hineindrücken lassen, jedoch dann in der Bohrung sicher und dauerhaft gehalten werden.

Die Platte 24 ist entweder nur an der Unterseite 14 des Oberteils 7 oder auch an der Unterseite 15 von Zwischenböden 9 angebracht. Im Oberteil 6 wird die Platte 24 von oben nach Abnahme der Abdeckung 23 eingelegt, während die Platte 24 in den Zwischenboden 9 nach Abnahme der Auflageplatte 28 einlegbar ist. Die Platten 24 werden im Oberteil 6 und in den Zwischenböden 9 im Bereich ihrer äußeren Ränder gehalten. Die Platten 24 sind mit regelmäßig verteilten Bohrungen zur Aufnahme der Endstücke 17 der Lichtleitkabel versehen, wobei Anordnung und Häufigkeitsverteilung sich nach Art der gewünschten Beleuchtung richten können. Infolge der Lagerung der Platte 24, deren Position durch entsprechende nicht gezeigte Mittel eindeutig festgelegt und als einfache Auflage ausgebildet ist, und deren Zugänglichkeit von oben nach Abnahme der Abdeckung 23 bzw. der Auflageplatte 28 ermöglicht wird, kann die Platte 24 auch auswechselbar sein, indem je nach gewünschter Helligkeit oder Lichtverteilung entsprechende Platten 24 bereitgehalten werden, in welche vor dem Einsetzen lediglich die Endstücke 17 mit ihrem Lichtleitkabel 16 umzustecken sind. Dies kann auch am Aufstellungsort später erfolgen. Die eventuell für den augenblicklichen Einsatzzweck dabei nicht benötigten Lichtleitkabel 16 müssen nicht aus dem Zwischenboden 9 und durch den Kabelschacht 11 in das Oberteil 7 gezogen werden sondern können in dem Hohlraum 25 des betreffenden Zwischenbodens 9 verbleiben.

Die Vitrine 1 kann auch einen oder mehrere Zwischenböden 9 aufweisen, die von senkrechten, mit dem Oberteil 6 und dem Unterteil 7 befestigten Stangen 13 gehalten werden. Die Stangen 13 sind jeweils in der Ecke zweier aneinanderstoßender Seitenflächen im Innern der Vitrine angebracht. Die Zwischenböden 9 sind mit entsprechenden Bohrungen 29 zur Aufnahme der Stangen 13 versehen und sind mit ihnen fest verbunden oder können auch senkrecht auf den Stangen 13 nach oben und unten verschoben werden, wobei sie in der gewünschten Lage durch jeweils einen, an der Stange 13 befestigbaren Feststellring 18 gehalten werden. Dieser erlaubt beispielsweise durch angebrachte Stellschrauben eine feste und lösbare Verbindung mit der Stange 13. Die Feststellringe 18 können dabei zwischen der Auflageplatte 28 und der Unterseite 15 eines Zwischenbodens 9 verdeckt sitzen und erst nach Abnahme einer nicht gezeigten Seitenverkleidung des Zwischenbodens 9 zugänglich sein.

Zwischen dem Oberteil 6 und dem Unterteil 7 ist im Bereich der hinteren Seitenfläche 5 ein senkrechter, geschlossener Kabelschacht 11 vorgesehen, welcher zur Führung der Lichtleitkabel 16 von der im Oberteil 6 befindlichen Beleuchtungsquelle 19 zu den Zwischenböden 9 dient. Dabei treten die Lichtleitkabel 16 für einen Zwischenboden 9 in Höhe desselben aus dem Kabelschacht 11 aus und gelangen durch eine Öffnung 26 in den durch die Auflageplatte 28 und die Platte 24 gebildeten Hohlraum 25 des Zwischenbodens 9. Ist der Zwischenboden 9 in seiner Höhe nicht verstellbar, so ist der Kabelschacht 11 nur mit einer entsprechenden nicht gezeigten Austrittsöffnung im Bereich der Öffnung 26 des Zwischenbodens 9 zu versehen, welche durch den Zwischenboden 9 verdeckt wird. Bei einer in der Höhe beliebigen Verstellbarkeit der Zwischenböden 9 ist der Kabelschacht 11 mit einem senkrecht und mittig verlaufenden Schlitz 12 für den Austritt der Lichtleitkabel 16 aus demselben zu versehen. Die Breite des Schlitzes 12 richtet sich dabei nach der Breite des Lichtleiterkabelbündels eines Zwischenbodens 9.

Sind zwei Zwischenböden 9 vorgesehen, so kann das Lichtleitkabelbündel für den einen Zwischenboden 9 auf der einen Seite des Kabelschachtes 11 und das Lichtleitkabelbündel für den anderen Zwischenboden 9 auf der anderen Seite des Kabelschachtes 11 geführt werden und zwar jeweils in einem Raum 27 innerhalb des Kabelschachtes 11, welcher jeweils durch Stege 21 außerhalb des Schlitzes 12 gebildet wird. Die Stege 21 sind als schmale Vorsprünge in regelmäßigen Abständen ausgebildet, wobei der Abstand zwischen zwei Stegen mindestens der Stärke eines Lichtleitkabelbündels entsprechen muß, damit dieses aus dem Kabelschacht 11 herausgeführt werden kann. Erfolgt die Stromzuführung für die Beleuchtungsquelle 19 vom Fußboden 22 aus, so kann auch das nicht gezeigte Netzkabel vom Unterteil 6 durch den Kabelschacht 11 zur Beleuchtungsquelle 19 im Oberteil 7 geführt werden.

## Patentansprüche

1. Vitrine zur Zurschaustellung von Gegenständen mit einer Beleuchtungsvorrichtung und mit mehreren, aus durchsichtigem Material bestehenden Seitenflächen (2,3,4,5), einem als Sockel gebildeten Unterteil (6) und einem die Oberseite bildenden Oberteil (7), in dem sich die Beleuchtungsvorrichtung befindet,
**dadurch gekennzeichnet**,
daß das Oberteil (7) eine Beleuchtungsquelle (19) mit einer Vielzahl von daran angeschlossenen Lichtleitkabeln (16) enhält, deren Endstücke (17) durch die Unterseite (14) des Oberteils (7) ragen, daß zwischen dem Oberteil (7) und dem Unterteil (6) ein oder mehrere Zwischenböden (9) angebracht sind, daß weitere Lichtleitkabel (16) vom Oberteil (7) zu den jeweiligen Zwischenböden (9) geführt sind und dort mit ihren Endstücken (17) in der Unterseite (15) enden, daß die Unterseite (14) des Oberteils (7) und die Unterseite (15) der Zwischenböden (9) jeweils aus einer Platte (24) besteht, in welcher die Endstücke (17) der Lichtleitkabel (16) gehalten werden, daß im Bereich der Innenseite einer Seitenfläche (3,4,5) ein senkrechter Kabelschacht (11) zwischen dem Oberteil (7) und dem Unterteil (6) zur Aufnahme der zu dem bzw. den Zwischenböden (9) führenden Lichtleitkabeln (16) angebracht ist, daß der Zwischenboden (9) einen Hohlraum (25) zur Aufnahme der Lichtleitkabel (16) aufweist, welcher durch eine Öffnung (26) im Bereich des Kabelschachtes (11) von außen zugänglich ist, daß der bzw. die Zwischenböden (9) in ihrer Höhe verstellbar ist bzw. sind und daß der Kablschacht (11) einen nach dem Innern der Vitrine (1) gerichteten senkrechten Schlitz (12) aufweist.

2. Vitrine nach Anspruch 1,
dadurch gekennzeichnet,
daß der Schlitz (12) des Kabelschachtes (11) mittig verläuft und daß der Kabelschacht außerhalb der Bereiche der Zwischenböden (9) jeweils im Innern zu beiden Seiten des Schlitzes (12) einen Raum (27) zur Aufnahme der Lichtleitkabel (16) aufweist, welcher durch einen im Bereich des Schlitzes (12) angebrachten Steg (21) begrenzt wird.

3. Vitrine nach einem der Ansprüche 1 oder 2,
dadurch gekennzeichnet,
daß die Platte (24) auswechselbar ist.

4. Vitrine nach einem der Ansprüche 1 bis 3,
dadurch gekennzeichnet,
daß unterschiedliche Platten mit verschiedenen Anordnungen der Bohrungen zur Aufnahme jeweils eines Endstückes (17) eines Lichtleitkabels (16) vorgesehen sind.

5. Vitrine nach einem der Ansprüche 1 bis 4,
dadurch gekennzeichnet,
daß jeweils in dem Bereich, in welchem zwei Seitenflächen (2,3,4,5) jeweils mit ihren senkrechten Kanten aneinanderliegen, eine senkrechte Stange (13) zwischen Oberteil (7) und Unterteil (6) angebracht ist, an welcher der bzw. die Zwischenböden (9) durch geeignete Mittel (18) befestigt sind.

6. Vitrine nach einem der Ansprüche 1 bis 5,
dadurch gekennzeichnet,
daß ein Netzkabel für die Beleuchtungseinrichtung (19,20) im Unterteil (6) in die Vitrine (1) eintritt und durch den Kabelschacht (11) zum Oberteil (7) geführt wird.

7. Vitrine nach einem der Ansprüche 1 bis 6,
dadurch gekennzeichnet,
daß zwischen der Beleuchtungsquelle (19) und den Lichtleitkabeln (16) ein Filter (20) vorgesehen ist, durch welches die, für die in der Vitrine (1) ausgestellten Gegenstände schädliche, von der Beleuchtungsquelle (19) ausgehenden Strahlenanteile zurückgehalten werden.

## Claims

1. Display case for displaying objects, with a lighting device and with a plurality of side surfaces (2,3,4,5) consisting of transparent material, a lower part (6) formed as a pedestal and an upper part (7) forming the top surface and in which the lighting device is situated,
**characterised in that**
the upper part (7) contains a light source (19) with a large number of fibre-optic cables (16) connected to same, the end pieces (17) of which cables project through the underside (14) of the upper part (7), in that between the upper part (7) and the lower part (6) one or more intermediate bases (9) are fixed, in that further fibre-optic cables (16) are led from the upper part (7) to the respective intermediate bases (9) and end there with their end pieces (17) in the underside (15), in that the underside (14) of the upper part (7) and the underside (15) of the intermediate bases (9) consists in each case of a plate (24) in which the end pieces (17) of the fibre-optic cables (16) are held, in that in the region of the inner side of a side surface (3,4,5) a perpendicular cable shaft (11) is fixed between the upper part (7) and the lower part (6) to receive the fibre-optic cables (16) leading to the intermediate base or bases, in that the intermediate base (9) has a cavity (25) for receiving the fibre-optic cables (16), which cavity is accessible from outside through an aperture (26) in the region of the cable shaft (11), in that the intermediate base or bases (9) can be adjusted in respect of their height and in that the cable shaft (11) has a vertical slot (12) directed towards the inside of the display case (1).

2. Display case according to claim 1,
**characterised in that**
the slot (12) of the cable shaft (11) runs in the centre and in that the cable shaft, outside the regions of the intermediate bases (9), has in each case on the inside on both sides of the slot (12) a space (27) for receiving the fibre-optic cable (16), which space is delimited by a web (21) fixed in the region of the slot (12).

3. Display case according to one of claims 1 or 2,
**characterised in that**
the plate (24) can be exchanged.

4. Display case according to one of claims 1 to 3,
**characterised in that**,
different plates are provided with different arrangements of the bore holes for receiving in each case one end piece (17) of a fibre-optic cable (16).

5. Display case according to one of claims 1 to 4,
**characterised in that**,
in each case in the region in which two side surfaces (2,3,4,5) adjoin one another with their vertical edges, a vertical rod (13) is fixed between upper part (7) and lower part (6), to which rod the intermediate base or bases is/are fastened by appropriate means (18).

6. Display case according to one of claims 1 to 5,
**characterised in that**,
a mains cable for the lighting device (19,20) enters the lower part (6) of the display case (1) and is led through the cable shaft (11) to the upper part (7).

7. Display case according to one of claims 1 to 6,
**characterised in that**,
between the light source (19) and the fibre-optic cables (16), a filter (20) is provided, through which the portions of the rays emitted by the light source and harmful to the objects displayed in the case (1) are held back.

## Revendications

1. Vitrine pour exposer des objets avec un dispositif d'éclairage et avec plusieurs flancs (2, 3, 4, 5)en matière transparente, une partie (6) inférieure formée comme un socle et une partie (7) supérieure formant le dessus, dans laquelle se trouve le dispositif d'éclairage, caractérisée en ce que la partie (7) supérieure comprend une source (19) d'éclairage avec une multiplicité de câbles (16) fibres optiques qui y sont connectés et dont les extrémités (17) font saillie de la face (14) inférieure de la partie (7) supérieure, par le fait qu'une ou plusieurs planches (9 intermédiaires sont placées entre la partie (7) supérieure et la partie (6) inférieure, par le fait que d'autres câbles (16) fibres optiques vont de la partie (7) supérieure aux planches (9) intermédiaires respectives et se terminent là avec leurs extrémités (17) dans la face (15) inférieure, par le fait que la face (14) inférieure de la partie (7) supérieure et la face inférieure (15) des planches (9) intermédiaires sont respectivement constituées d'une plaque (24) dans laquelle les extrémités (17) des câbles (16) fibres optiques sont maintenus, par le fait que dans la région de la face intérieure d'un flanc (3, 4, 5) une gaine (11) verticale est placée entre la partie (7) supérieure et la partie (6) inférieure pour recevoir les câbles (16) fibres optiques allant jusqu'à la ou encore les planches (9) intermédiaires, par le fait que chaque planche (9) intermédiaire présente un vide (25) pour recevoir les câbles (16) fibres optiques, qui est accessible de l'extérieur par une ouverture (26) dans la région de la gaine (11), par le fait que la ou encore les planches (9) intermédiaires peut ou encore peuvent être réglées en hauteur et par le fait que la gaine (11) présente une fente (12) verticale orientée vers l'intérieur de la vitrine.

2. Vitrine selon la revendication 1, caractérisée en ce que la fente (12) de la gaine (11) s'étend en son centre et en ce que la gaine présente en dehors des régions des planches (9) intermédiaires à chaque fois des deux côtés de la fente (12) un espace (27) pour recevoir les câbles (16) fibres optiques, qui est limité par une traverse (21) placée dans la région de la fente (12).

3. Vitrine selon une des revendications 1 ou 2, caractérisée en ce que la plaque (24) peut être remplacée

4. Vitrine selon une des revendications 1 à 3, caractérisée en ce que différentes plaques sont pourvues de dispositions différentes des orifices pour recevoir à chaque fois une extrémité (17) d'un câble (16) fibre optique.

5. Vitrine selon une des revendications 1 à 4, caractérisée en ce que chaque fois dans la région où deux flancs (2, 3, 4, 5) se touchent par leurs bords verticaux, une barre (13) verticale, sur laquelle la ou encore les planches (9) intermédiaires sont fixées par des moyens (18) appropriés, est placée entre la partie (7) supérieure et la partie (6) inférieure.

6. Vitrine selon une des revendications 1 à 5, caractérisée en ce qu'un câble de distribution pour le dispositif (19, 20) d'éclairage pénètre dans la partie inférieure (6) de la vitrine (1) et est amené par la gaine (11) dans la partie supérieure (7).

7. Vitrine selon une des revendications 1 à 6, caractérisée en ce qu'entre la source (19) d'éclairage et les câbles (16) fibres optiques, il est prévu un filtre (20) par lequel est retenue une fraction du rayonnement provenant de la source lumineuse (19), nuisible pour les objets exposés dans la vitrine (1).
